# EUROPÄISCHE PATENTSCHRIFT

(11) **EP 2 725 957 B1**
(45) Veröffentlichungstag und Bekanntmachung des Hinweises auf die Patenterteilung: **09.10.2019**
(21) Anmeldenummer: 12729112.8
(22) Anmeldetag: 21.06.2012
(51) Int. Cl.: A47L 9/24, F16B 7/00, F16L 37/00

(54) **VERBINDUNGSHÜLSE ZUR VERBINDUNG VON ROHREN MIT WEITEREN BAUTEILEN**
CONNECTION SLEEVE FOR CONNECTING TUBES TO OTHER COMPONENTS
MANCHON DE RACCORDEMENT PERMETTANT DE RACCORDER DES TUBES À D'AUTRES ÉLÉMENTS

(30) Priorität: 30.06.2011 DE 102011078378
(43) Veröffentlichungstag der Anmeldung: 07.05.2014
(73) Patentinhaber: BSH Hausgeräte GmbH, 81739 München (DE)
(72) Erfinder: FRIES, Mirko, 01896 Lichtenberg (DE); GÖPPNER, Thomas, 97616 Salz (DE); HAMM, Silvio, 98617 Sülzfeld (DE)
(86) Internationale Anmeldenummer: PCT/EP2012/061903
(87) Internationale Veröffentlichungsnummer: WO 2013/000799

(56) Entgegenhaltungen:
- DE-C1- 10 142 684
- DE-U1- 9 216 257
- US-A- 5 462 311

## Beschreibung

### TECHNISCHES GEBIET

Ausführungsbeispiele der vorliegenden Erfindung befassen sich mit Verbindungshülsen zum Verbinden von zylindrischen Rohren mit weiteren Bauteilen und insbesondere mit Verbindungshülsen, mit denen Staubsaugerrohre untereinander oder mit weiteren Bauteilen eines Staubsaugers verbunden werden können.

### STAND DER TECHNIK

Bei einer Mehrzahl von bekannten Lösungen zum Verbinden von Gegenständen mit Rohren bzw. hohlen zylindrischen Gegenständen wird an einem Ende eines Rohres zunächst ein zusätzliches Bauteil, beispielsweise eine Hülse innerhalb des Rohres oder an dem Rohr angebracht, wobei die Hülse dazu dient, weitere Gegenstände bzw. Bauteile mit dem Rohr zu verbinden oder diese bezüglich des Rohres zu positionieren.

Beispielsweise schlägt das deutsche Gebrauchsmuster DE 202010010211 U1 vor, an einem axialen Ende eines Staubsaugerrohres ein hülsenartiges Einsatzteil anzuordnen, das eine Betätigungshandhabe aufweist, die mit einem Sperrkörper zusammenwirkt. Durch einen Eingriff des Sperrkörpers in eine Ausnehmung an dem mit dem Staubsaugerrohr zu verbindenden Anschlussbauteil kann eine lösbare Verbindung mit dem Anschlussbauteil hergestellt werden. Um das Einsatzteil mit der Hülse in dem Rohr befestigen zu können, weist das Rohr am Ende einen sich bis zum Ende des Rohres erstreckenden Schlitz auf, in den das Einsatzteil eingreift. Um das Einsatzteil selbst mit dem Rohr zu verbinden, sind zusätzliche Befestigungsvorrichtungen vorgesehen, die ein Verschieben des Einsatzteils bezüglich des Rohres verhindern. Dies verkompliziert die Montage eines solchen Staubsaugerrohres und erhöht somit die Kosten.

Das deutsche Gebrauchsmuster DE 29702789 U1 schlägt vor, zum Führen eines Teleskoprohres eines Staubsaugers eine Führungsbuchse endseitig in das Außenrohr einzubringen, welche eine Ausnehmung für einen Sperrkörper aufweist, der in der Führungsbuchse beweglich gehalten wird und durch eine im Außenrohr vorhandene Aussparung in eine Rastleiste des Innenrohres blockierend eingreifen kann. Dadurch kann die Position der beiden Rohre relativ zueinander fixiert werden. Um dem Sperrkörper den Eingriff mit dem im Innenteil des Außenrohres verlaufenden Teleskoprohr zu ermöglichen, weist die Führungsbuchse einen Durchbruch für den Sperrkörper auf, der entfernt von einer Rastnase angeordnet ist, welche wiederum dazu dient, die Führungsbuchse innerhalb des Außenrohres zu fixieren.

Einen ähnlichen Ansatz beschreibt die US-Patentanmeldung 2008284158 A1, die zum rastbaren Verbinden eines Staubsaugerteleskoprohrs mit einem Außenrohr vorschlägt, einen Einsatz in das geweitete Außenrohr einzubringen, der der Führung des Teleskoprohres dient und einen Durchbruch für einen Sperrmechanismus aufweist. Dieser kann in Kerben am Teleskoprohr eingreifen, um dessen Position zu fixieren. Der Einsatz selbst wird mittels einer Schraube mit dem Außenrohr verbunden, was einen zusätzlich Produktionsschritt erforderlich macht. Der Verriegelungsmechanismus ist inklusive dessen Lagerung aus mehreren Teilen zusammengesetzt und mit dem Außenrohr verbunden.

In US 5,462,311 ist eine teleskopische Anordnung mit einem ersten Rohr und einem zweiten Rohr offenbart, wobei das erste Rohr verschiebbar in das zweite Rohr hineinpasst. Im zweiten Rohr ist eine Hülse angeordnet, um das erste Rohr in Beziehung zum zweiten Rohr zu sichern. Die Hülse weist an ihrer Außenseite zwei Zähne auf, die die Hülse im zweiten Rohr halten. Weiter weist die Hülse an einem Ende zwei Finger auf, die sich beim Herausziehen des ersten Rohrs aus dem zweiten Rohr in einen verjüngten Bereich des ersten Rohrs elastisch einlegen und dadurch verhindern, dass das erste Rohr aus der Hülse herausgezogen wird; beim Hereinschieben des ersten Rohrs in das zweite Rohr biegen sich die Finger elastisch nach außen, um das Hereinschieben zu ermöglichen.

Die Patentschrift DE 101 42 684 C1 betrifft ein Staubsauger-Saugrohr mit einem Außenrohr und einem darin teleskopierend verschieblichen Innenrohr sowie mit einem den Zwischenraum zwischen beiden Rohren am Endbereich des Innenrohres abdichtenden Dichtring mit einem Dichtelement aus Kunststoff. Der Dichtring ist entweder an der Innenumfangsfläche oder auf der Außenumfangsfläche des Innenrohrs angeordnet und übergreift mit seinem Endbereich die Stirnfläche des Innenrohrs. Sofern der Dichtring innerhalb des Innenrohrs angeordnet ist, wird dieser durch zwei diametral gegenüberliegende Rastnocken gehaltert, die in Öffnungen im Innenrohr eingreifen, oder durch Vorsprünge auf der Innenumfangsfläche des Innenrohrs. Bei einem Dichtring, der auf der Außenumfangsfläche des Innenrohrs angeordnet ist, greifen Rastnocken in Öffnungen des Innenrohrs ein. Ein Verriegelungselement zum Befestigen weiterer Bauteile wird nicht erwähnt.

Bei den im Stand der Technik bekannten Vorrichtungen zum Verbinden von Zubehörteilen mit einem zylindrischen Rohr sind die der Befestigung der verwendeten Hülsen dienenden Bauteile und diejenigen Komponenten, die der Befestigung bzw. Betätigung eines Verriegelungsmechanismus mehrteilig bzw. räumlich voneinander getrennt, was deren Montage erschwert und die Kosten erhöht.

### DARSTELLUNG DER ERFINDUNG

Ausführungsbeispiele der vorliegenden Erfindung vermeiden die oben aufgezeigten Nachteile, indem eine einstückige Verbindungshülse zum Einsetzen bzw. Einbringen in ein zylindrisches Rohr verwendet wird, die einen im Wesentlichen zylindrischen Grundkörper aufweist, dessen Außendurchmesser auf den Innendurchmesser des Rohres angepasst ist. Der Grundkörper weist ein sich in einer radialen Richtung nach außen erstreckendes, also ein von der Rotationsachse der zylindrische Grundform nach außen gerichtetes, Rastelement auf, um mit einer Ausnehmung bzw. einem Durchbruch in dem Rohr zu Verrasten, so dass im verrasteten Zustand eine Bewegung der Verbindungshülse relativ zu dem Rohr in einer axialen Richtung verhindert wird. D.h., das Rastelement erstreckt sich im eingebauten Zustand über den Außendurchmesser des Grundkörpers hinaus in einen Durchbruch des zylindrischen Rohres, so dass die Verbindungshülse nicht mehr in Richtung des Rohrendes bewegt werden kann. In diesem Sinne ist also die axiale Richtung als diejenige Richtung zu verstehen, die parallel zur Rotationsachse des zylindrischen Grundkörpers in Richtung auf das Ende des Rohres bzw. des dem Ende des Rohres zugeordneten Endes der Verbindungshülse weist. Das Rastelement dient dabei nicht allein dem Verrasten der Verbindungshülse sondern weist ferner ein Widerlager für einen Verriegelungsmechanismus bzw. für ein Verriegelungselement auf, mittels dessen weitere Bauteile im Inneren eines mit der Verbindungshülse versehenen Rohres verrastet oder befestigt werden können.

Das Rastelement dient also sowohl dazu, die Verbindungshülse innerhalb des Rohres zu verankern als auch dazu, einen Teil eines Verriegelungsmechanismusses zur Verfügung zu stellen, der zum lösbares Verbinden weiterer Bauteile mit dem Rohr erforderlich ist.

Dies kann unter anderem eine Vereinfachung der Produktion eines mit einer solchen Verbindungshülse ausgestatteten Rohres bewirken, da mittels eines einzigen Verarbeitungsschrittes sowohl die Verbindungshülse als auch ein Hauptteil des Verriegelungsmechanismusses mit dem Rohr verbunden werden kann. Ferner wird die Anzahl der erforderlichen Bauteile reduziert, was zu einer Kosteneinsparung führen und die Zuverlässigkeit des Verriegelungsmechanismus erhöhen kann.

Bei einigen Ausführungsbeispielen ist dieses Widerlager in Form einer nach außen gerichteten Ausnehmung in der Oberfläche des Rastelements gebildet. Bei einigen Ausführungsbeispielen, bei denen der Verriegelungsmechanismus sich über eine Drehachse an dem Rastelement abstützt, kann die Ausnehmung eine im Wesentlichen zylindrische Form haben.

Bei einigen Ausführungsbeispielen ist das Rastelement bezüglich des Grundkörpers in der radialen Richtung beweglich. Dies hat den Vorteil, dass das Rastelement beim Einbringen der Hülse in ein Rohr elastisch nachgeben und bis zum Verrasten mit dem Rohr in einer nach innen gedrückten Positionen in das Rohr eingeführt werden kann. Dies führt zu geringem Montageaufwand und geringen Montagekräften. Um die Einstückigkeit zu erreichen, kann die erforderliche Flexibilität durch eine bewusste Materialschwächung erreicht werden, die in sich in einem Verbindungsbereich zwischen dem Rastelement und dem Grundkörper befindet.

Bei einigen Ausführungsbeispielen weist die Verbindungshülse ferner an dem rohrinnenseitigen Ende, also an dem entgegen der axialen Richtung liegenden Ende, eine umlaufende Dichtlippe auf. Diese führt zu einer Abdichtung der Hülse bezüglich des Innendurchmessers des Rohres, was beispielsweise bei Staubsaugerrohren oder bei von einem Medium durchströmten Rohren die Undichtigkeit verringern und damit die Strömungsgeräusche und die Strömungsverluste reduzieren kann. Dies wird erreicht, ohne dass eine separate Dichtung verwendet werden müsste. Ferner wird diese Dichtfunktion ebenfalls ohne einen zusätzlichen Montageschritt implementiert.

Bei einigen weiteren Ausführungsbeispielen der Erfindung ist die nach innen gerichtete Oberfläche des Grundkörpers zylindrisch und weist einen Durchmesser auf, der zu dem Durchmesser derjenigen Bauteile korrespondiert, die mit dem Rohr verbunden werden sollen. Solche Bauteile können beispielsweise weitere Bauteile eines Staubsaugers, wie beispielsweise Bodendüsen, Handgriffe, Schlauchverlängerungen, Handdüsen oder weitere Staubsaugerrohre sein. Weitere Bauteile im oben genannten Sinne können insbesondere auch Segmente eines Teleskoprohres sein, welche teilweise innerhalb eines mit der Verbindungshülse ausgestatteten Außenrohres verlaufen.

Bei einigen Ausführungsbeispielen ist die nach innen gerichtete Oberfläche des Rastelements ebenfalls gekrümmt und weist denselben Krümmungsradius wie die nach innen gerichtete Oberfläche des Grundkörpers auf. Dies führt dazu, dass ein in die Verbindungshülse eingeführtes weiteres Bauteil das Rastelement zusätzlich in seiner Lage fixieren kann, so dass auch durch das Auswirken einer äußeren Kraft auf das Rastelement die Verbindung des Rastelements mit dem Rohr nicht mehr gelöst werden kann.

Neben den oben beschriebenen Vorteilen erfordern die Verbindungshülsen lediglich einen einzigen Ausschnitt bzw. eine einzige Aussparung in dem meist metallischen Rohr, da die Funktionalität des Verrastens der Verbindungshülse mit dem Rohr und das Einbringen eines Verriegelungsmechanismus es bzw. eines Rastelements in die Innenseite des Rohres räumlich unmittelbar benachbart sind, so dass lediglich ein einziger Durchbruch in dem Rohr erforderlich ist, was die Herstellungskosten der verwendbaren Rohre reduzieren kann.

Zusammengefasst ermöglichen es Ausführungsbeispiele der Erfindung, die Funktionalität des Verbindens der Verbindungshülse mit einem Rohr sowie das Bereitstellen eines Widerlagers für ein Verbindungselement zum Verbinden weiterer Bauteile mit dem Rohr in einem einzigen Rastelement eines einstückigen, leicht montierbaren Bauteils zu vereinen, was die Herstellungskosten für die Verbindungshülse sowie Zeit und Kosten bei der Montage sparen kann.

### KURZE BESCHREIBUNG DER FIGUREN

Weitere vorteilhafte Ausgestaltungen werden nachfolgend an Hand eines in der Zeichnung dargestellten Ausführungsbeispieles, auf welches die Erfindung jedoch nicht beschränkt ist, näher beschrieben. Es zeigen:
- Fig. 1: eine perspektivische Ansicht einer Verbindungshülse;
- Fig. 2: eine Schnittansicht durch die Verbindungshülse von Figur 1;
- Fig. 3: eine weitere perspektivische Ansicht der Verbindungshülse der Figuren 1 und 2;
- Fig. 4: eine perspektivische Ansicht eines mittels einer Verbindungshülse mit einem Staubsaugerrohr verbundenen Handgriffs; und
- Fig. 5: eine Schnittansicht durch die in Figur 4 gezeigte Darstellung.

### DETAILLIERTE BESCHREIBUNG VON AUSFÜHRUNGSBEISPIELEN

Bei der nachfolgenden Beschreibung bevorzugter Ausführungsformen der vorliegenden Erfindung bezeichnen gleiche Bezugszeichen gleiche oder vergleichbare Komponenten.

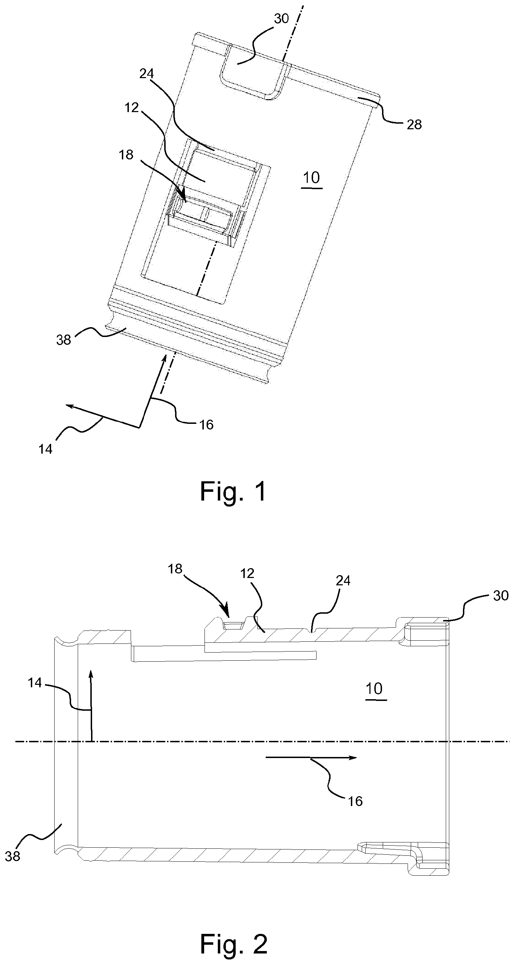

Die Figuren 1 bis 3 zeigen ein Ausführungsbeispiel einer Verbindungshülse zum Einbringen in ein zylindrisches Rohr in verschiedenen Darstellungen bzw. Ansichten.

Die Verbindungshülse 10 weist eine zylindrische Grundform auf, d.h. mit anderen Worten, sie hat einen hohlen zylindrischen Grundkörper. Der Außendurchmesser des zylindrischen Grundkörpers ist auf den Innendurchmesser des Rohres angepasst, in das die Verbindungshülse 10 eingebracht bzw. eingesetzt werden soll. Um mit dem Rohr verbunden werden zu können, weist die Verbindungshülse 10 ein Rastelement 12 auf, das sich in einer radialen Richtung 14 von der Oberfläche des Grundkörpers nach außen erstreckt. Die so von dem Rastelement 12 gebildete Erhöhung bzw. Kante dient dazu, um mit einer dazu korrespondierenden Ausnehmung im Rohr zu verrasten, sodass nach dem erfolgten Verrasten eine Relativbewegung von Verbindungshülse 10 und Rohr in einer axialen Richtung 16 verhindert wird. Die axiale Richtung 16 ist somit diejenige Richtung, die in Richtung des Rohrendes bzw. des zu dem Rohrende korrespondierenden Endes der Verbindungshülse 10 weist.

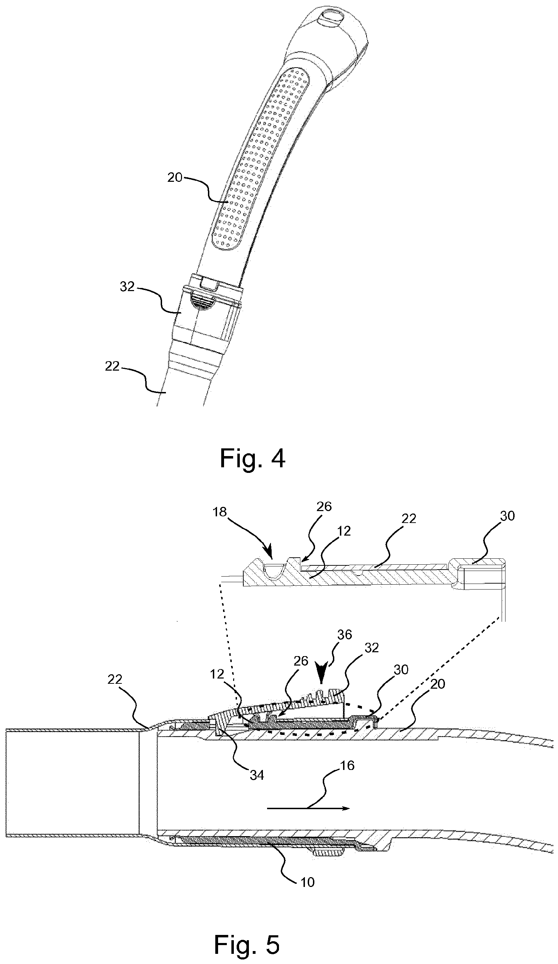

Das Rastelement 12 weist ferner ein Widerlager 18 für ein Verriegelungselement auf, mittels dessen ein in die Verbindungshülse 10 eingeführtes weiteres Bauteil bezüglich des Rohres und somit auch bezüglich der Verbindungshülse 10 fixiert werden kann. Zum besseren Verständnis dieses Mechanismusses sei bereits an dieser Stelle auf die Darstellung in den Figuren 4 und 5 verwiesen, in denen die Verbindungshülse 10 mit einem Staubsaugerrohr 22 verrastet dargestellt ist. Dabei ist zusätzlich ein Verriegelungselement 32 gezeigt, mittels dessen ein Handgriff 20 eines Staubsaugers innerhalb der Verbindungshülse 10 und somit auch innerhalb des mit der Verbindungshülse 10 verrasteten Staubsaugerrohres 22 fixiert ist. In den nachfolgenden Absätzen wird aus Gründen der besseren Verständlichkeit die Funktionalität der Verbindungshülse 10 in einer Zusammenschau der Figuren 1-5 beschrieben.

Wie aus den Figuren 4 und 5 ersichtlich, kann ein Ausführungsbeispiel einer Hülse 10 also beispielsweise dazu verwendet werden, einen Handgriff 20 eines Staubsaugers mit einem Staubsaugerrohr 22 lösbar zu verbinden. Zu diesem Zweck wird zunächst die Verbindungshülse 10 in das Rohr 22 eingefügt. Das Rohr 22 wurde im vorliegenden Fall an einem Ende auf einen Durchmesser, der zu dem Durchmesser der Verbindungshülse 10 passt, geweitet. Während des Einfügens oder Einschiebens der Verbindungshülse 10 in das Staubsaugerrohr 22 wird das Rastelement 12 aus seiner in den Figuren 1 und 2 gezeigten Ruhelage ausgelenkt und in das Innere der Verbindungshülse 10 gedrückt. Um dies zu ermöglichen, ist das Rastelement 12 über eine Materialschwächung 24, also über einen Bereich, in dem das Material einen geringeren Querschnitt aufweist als in der Umgebung, mit dem restlichen Grundkörper der Verbindungshülse 10 verbunden. Aufgrund der durch die Materialschwächung gegebenen Flexibilität ist das Einfügen der Verbindungshülse 10 mit geringem Kraftaufwand möglich.

Die nach innen weisende Oberfläche des Rastelements 12 ist, ebenso wie die nach innen gerichtete Oberfläche des Grundkörpers, zylindrisch, wobei deren Krümmungen gleich sind. Dies führt dazu, dass ein in das Innere der Verbindungshülse 10 bzw. des Staubsaugerrohres 22 eingesetztes Bauteil selbst verhindert, dass die Verrastung des Rastelements 12 gelöst werden kann. Die durch die Materialschwächung 24 erzielte, bei der Montage vorteilhafte Flexibilität des Rastelements 12 bezüglich des Grundkörpers kann also erreicht werden, ohne die Stabilität der Verrastung des Rastelements 12 mit dem Staubsaugerrohr 22 zu beeinträchtigen.

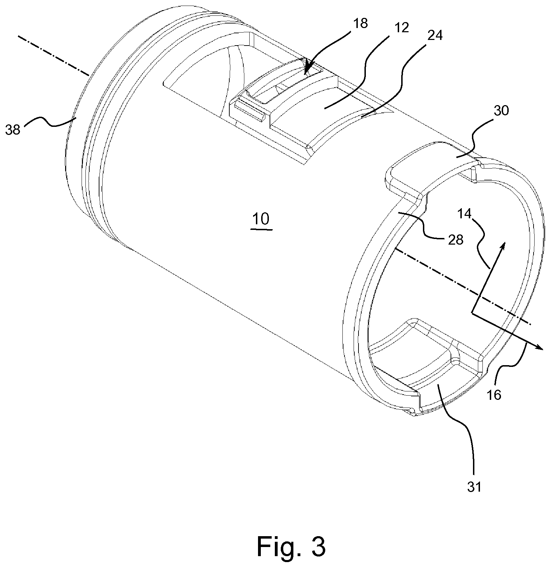

Das Rastelement 12 ist, wie es aus der Schnittansicht in Figur 5 und insbesondere aus der dort gezeigten Ausschnittsvergrößerung hervorgeht, in einer Ausnehmung des Staubsaugerrohres 22 verrastet, d.h., eine Kante 26 des Rastelements 12 liegt an einer Kante der Ausnehmung an und verhindert, dass sich die Verbindungshülse 10 in der axialen Richtung 16 relativ zum Staubsaugerrohr 22 bewegen kann. Eine weitere Bewegung entgegen der axialen Richtung 16 wird durch einen Bord 28 verhindert, welcher sich am axialen Ende der Verbindungshülse 10 befindet und sich von der Oberfläche des Grundkörpers in der radialen Richtung 14 nach außen erstreckt. Der Bord 28 dient somit als Anschlag für das Staubsaugerrohr 22 und verhindert ein weiteres Bewegen entgegen der axialen Richtung 16. Um die Verbindungshülse 10 im letzten Freiheitsgrad festzulegen, weist diese am axialen Ende ferner an zumindest einer Position entlang des Umfangs eine Nase 30 auf, die sich von der Oberfläche des Grundkörpers nach außen erstreckt und in der axialen Richtung 16 verläuft. Die Nase 30 greift, wie es in Figur 5 dargestellt ist, in eine dazu korrespondierende Ausweitung des Staubsaugerrohres 22 ein und verhindert so ein Verdrehen der Verbindungshülse 10 bezüglich des Staubsaugerrohres 22. Mit anderen Worten sorgt die Nase 30 für eine vorgegebene Orientierung der Verbindungshülse 10 in dem Staubsaugerrohr 22. Wie aus der anderen Perspektive in Figur 3 ersichtlich, weist die hier dargestellte Verbindungshülse 10 ferner eine optionale zweite Nase 31 auf, die der ersten Nase gegenüberliegt und die dieselbe Funktionalität besitzt wie die erste Nase.

Bei dem in den Figuren 4 und 5 dargestellten Ausführungsbeispiel weist ein Verriegelungselement 32 zum Fixieren weiterer Bauteile in dem Staubsaugerrohr 22 eine Rastnase 34 auf, die sich in das Innere des Staubsaugerrohres 22 erstreckt und dort im Eingriff mit einer dazu korrespondierenden Kerbe bzw. Vertiefung im Handgriff 20 steht, so dass dieser von der Rastnase 34 daran gehindert wird, in der axialen Richtung 16 wieder aus dem Staubsaugerrohr 22 zu rutschen. Um die Rastnase 34 in Position zu halten und um ein Lösen der Verrastung zu ermöglichen, weist die Verbindungshülse 10 das Widerlager 18 auf, in dem das Verriegelungselement 32 gelagert ist. Dabei dient das Widerlager 18 als Lager und Drehpunkt eines Hebelarms, der durch die Form des Verriegelungselements 32 gebildet wirkt. Durch Ausüben einer Kraft auf das Verriegelungselement 32 an der in Figur 5 gezeigten Position 36 kann die Rastnase 34 daher wieder aus dem Inneren des Staubsaugerrohres 22 entfernt werden, so dass die Verbindung mit dem Handgriff 20 wieder gelöst werden kann.

Um zusätzlich die Strömungsgeräusche und Strömungsverluste zu reduzieren, weist die Verbindungshülse 10 an ihrem zweiten, entgegen der axialen Richtung liegenden, Ende eine umlaufende Dichtlippe 38 auf, die entweder auf den Innendurchmesser des Staubsaugerrohres 22 oder auf den Außendurchmesser des Handgriffs 20 abgestimmt ist, um eine hohe Dichtigkeit der Verbindung zu gewährleisten. Dies sorgt für eine hohe Energieeffizienz der Gesamtanordnung bzw. eines mit einer Verbindungshülse 10 ausgestatteten Staubsaugers, da nur geringe Strömungsverluste auftreten können. Diese Abdichtung kann bei dem beschriebenen Ausführungsbeispiel der Erfindung erreicht werden, ohne dass ein zusätzliches Bauteil verwendet oder ein zusätzlicher Montageschritt erfolgen müsste, da die Dichtlippe an die Verbindungshülse angespritzt bzw. einstückig mit der Verbindungshülse ausgebildet ist.

Wenngleich in den vorhergehenden Absätzen die Verbindungshülse 10 in Verbindung mit einem Staubsaugerrohr bzw. für die Verwendung in einem Staubsauger diskutiert wurde, versteht es sich von selbst, dass Verbindungshülsen mit den oben beschriebenen Merkmalen in jedwedem anderen zylindrischen oder näherungsweise zylindrischen Rohr verwendet werden können, um weitere Komponenten oder Bauteile mit dem Rohr zu verbinden.

Insbesondere bei Staubsaugern können selbstverständlich auch andere Bauteile als Handgriffe mittels der Verbindungshülse mit Staubsaugerrohren oder anderen zylindrischen Rohren an oder im Staubsauger verbunden werden, da die Verbindungshülse 10 bezüglich deren Verwendung universell ist. Beispielsweise können auch Bodendüsen, Handstaubsaugerdüsen, Schlauchanschlüsse oder dergleichen mittels der oben beschriebenen Verbindungshülsen mit einem Staubsaugerrohr verbunden werden. Ferner können die oben beschriebenen Verbindungshülsen auch dazu verwendet werden, ein Teleskoprohr, das einen geringeren Außendurchmesser aufweist als der Innendurchmesser eines Außenrohres, innerhalb dessen das Teleskoprohr teilweise geführt wird, mit dem Außenrohr zu verbinden. Eine dann erforderliche Verrastung zur Längeneinstellung des Teleskoprohres kann auf vorteilhafte Art und Weise ebenfalls mittels der Verbindungshülse 10 und einem an dem Widerlager 18 der Verbindungshülse 10 gelagerten Verriegelungselement für das Teleskoprohr realisiert werden.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

Zusammengefasst ermöglichen es Ausführungsbeispiele der Erfindung, die Funktionalität des Verbindens der Verbindungshülse mit einem Rohr sowie das Bereitstellen eines Widerlagers für ein Verbindungselement zum Verbinden weiterer Bauteile mit dem Rohr in einem einzigen Rastelement eines einstückigen, leicht montierbaren Bauteils zu vereinen, was die Herstellungskosten für die Verbindungshülse sowie Zeit und Kosten bei der Montage sparen kann.

### BEZUGSZEICHENLISTE

- 10: Verbindungshülse
- 12: Rastelement
- 14: radiale Richtung
- 16: axiale Richtung
- 18: Widerlager
- 20: Handgriff
- 22: Staubsaugerrohr
- 24: Materialschwächung
- 26: Kante
- 28: Bord
- 30: Nase
- 31: zweite Nase
- 32: Verriegelungselement
- 34: Rastnase
- 36: Kraftrichtung
- 38: Dichtlippe

## Patentansprüche

1. Einstückige Verbindungshülse (10) zum Einbringen in ein zylindrisches Rohr (22), das einen Durchbruch aufweist, mit einem im Wesentlichen zylindrischen Grundkörper eines auf einen Rohrinnendurchmesser angepassten Außendurchmessers, mit folgenden Merkmalen:
ein sich von dem Grundkörper in einer radialen Richtung (14) nach außen erstreckendes Rastelement (12), das ausgebildet ist, um mit dem Durchbruch in dem Rohr (22) derart zu verrasten, dass im verrasteten Zustand eine Bewegung der Verbindungshülse (10) relativ zu dem Rohr (22) in einer axialen Richtung (16) verhindert wird,
**dadurch gekennzeichnet, dass**
das Rastelement (12) ferner ein Widerlager (18) für ein Verriegelungselement (32), mittels dessen weitere Bauteile im Inneren des mit der Verbindungshülse (10) versehenen Rohres (22) befestigt werden können, aufweist.

2. Verbindungshülse (10) gemäß Anspruch 1, bei der das Widerlager (18) durch eine Ausnehmung in der nach außen gerichteten Oberfläche des Rastelements (12) gebildet wird.

3. Verbindungshülse (10) gemäß Anspruch 2, bei der die Ausnehmung eine im Wesentlichen zylindrische Form hat.

4. Verbindungshülse (10) gemäß einem der vorhergehenden Ansprüche, bei der das Rastelement (12) bezüglich des Grundkörpers in der radialen Richtung (14) elastisch beweglich ist.

5. Verbindungshülse (10) gemäß Anspruch 4, bei der das Rastelement mit dem Grundkörper über eine Materialschwächung (24) verbunden ist, um die Beweglichkeit in der radialen Richtung (14) zu erreichen.

6. Verbindungshülse (10) gemäß einem der vorhergehenden Ansprüche, die ferner an ihrem entgegen der axialen Richtung (16) liegenden Ende eine umlaufende Dichtlippe (38) aufweist.

7. Verbindungshülse (10) gemäß einem der vorhergehenden Ansprüche, die an ihrem in der axialen Richtung (16) liegenden Ende einen sich in der radialen Richtung (14) von der Oberfläche des Grundkörpers erstreckenden Bord (28) aufweist, um eine Bewegung der Verbindungshülse (10) relativ zu dem Rohr (22) entgegen der axialen Richtung (16) zu begrenzen.

8. Verbindungshülse (10) gemäß einem der vorhergehenden Ansprüche, die an ihrem in der axialen Richtung (16) liegenden Ende ferner an zumindest einer Position entlang des Umfangs des Grundkörpers eine sich von der Oberfläche des Grundkörpers in der radialen Richtung (14) nach außen erstreckende und entgegen der axialen Richtung (16) verlaufende Nase (30) aufweist, um eine Drehbewegung der Verbindungshülse (10) relativ zu dem Rohr (22) zu verhindern.

9. Verbindungshülse (10) gemäß Anspruch 8, bei der sich die Nase (30) entlang des Umfangs an der gleichen Position wie das Rastelement (12) befindet.

10. Verbindungshülse (10) gemäß einem der vorhergehenden Ansprüche, bei der eine nach innen gerichtete Oberfläche des Grundkörpers zylindrisch ist und einen auf einen mit dem Rohr (22) zu verbindenden Gegenstand angepassten Innendurchmesser aufweist, wobei eine nach innen weisende Oberfläche des Rastelements (12) im verrasteten Zustand eine der Kontur der zylindrischen Oberfläche folgende Oberfläche aufweist.

11. Zylindrisches Rohr (22), insbesondere Staubsaugerrohr, mit der an einem Ende des Rohres eingesetzten Verbindungshülse (10) gemäß einem der vorhergehenden Ansprüche, ferner umfassend:
ein Verriegelungselement (32) mit einer sich in das Innere des Rohres (22) erstreckenden Rastnase (34), die durch Betätigung eines in dem Widerlager (18) gelagerten Hebelarmes aus dem Innenvolumen des Rohres entfernbar ist.

## Claims

1. Integrated connection sleeve (10) for introduction into a cylindrical tube (22), which has a perforation, with a substantially cylindrical basic body with an exterior diameter adapted to a tube internal diameter, with the following features:
a latching element (12) extending outwards from the basic body in a radial direction (14), which is embodied to latch with the perforation in the tube (22) in such a manner that in the latched state a movement of the connection sleeve (10) relative to the tube (22) in an axial direction (16) is prevented,
**characterised in that**
the latching element (12) further has a counter bearing (18) for an interlocking element (32), by means of which further components can be fastened inside the tube (22) provided with the connection sleeve (10).

2. Connection sleeve (10) according to claim 1, in which the counter bearing (18) is formed by a recess in the surface of the latching element (12) directed outwards.

3. Connection sleeve (10) according to claim 2, in which the recess has a substantially cylindrical shape.

4. Connection sleeve (10) according to one of the preceding claims, in which the latching element (12) is able to move in a resilient manner in the radial direction (14) in relation to the basic body.

5. Connection sleeve (10) according to claim 4, in which the latching element is connected to the basic body via a weakness in the material (24), in order to achieve the ability to move in the radial direction (14).

6. Connection sleeve (10) according to one of the preceding claims, which further has a surrounding sealing lip (38) at its end lying opposite the axial direction (16).

7. Connection sleeve (10) according to one of the preceding claims, which on its end lying in the axial direction (16) has an edge (28) extending in the radial direction (14) from the surface of the basic body, for limiting a movement of the connection sleeve (10) relative to the tube (22) opposite to the axial direction (16).

8. Connection sleeve (10) according to one of the preceding claims, which on its end lying in the axial direction (16) further has, at at least one position along circumference of the basic body, a lug (30) which extends outwards from the surface of the basic body in the radial direction (14) and runs opposite to the axial direction (16), for preventing a rotational movement of the connection sleeve (10) relative to the tube (22).

9. Connection sleeve (10) according to claim 8, in which the lug (30) is situated along the circumference at the same position as the latching element (12).

10. Connection sleeve (10) according to one of the preceding claims, in which an inwardly directed surface of the basic body is cylindrical and has an interior diameter adapted to an object to be connected to the tube (22), wherein an inwardly facing surface of the latching element (12) has a surface following the contour of the cylindrical surface in the latched state.

11. Cylindrical tube (22), in particular vacuum cleaner tube, with the connection sleeve (10) according to one of the preceding claims installed at one end of the tube, further comprising:
an interlocking element (32) with a latching lug (34) extending into the interior of the tube (22), which is able to be removed from the inner volume of the tube by activating a lever arm mounted in the counter bearing (18).

## Revendications

1. Manchon de raccordement (10) formé d'un seul tenant, destiné à être introduit dans un tube cylindrique (22) doté d'une percée, possédant un corps de base sensiblement cylindrique d'un diamètre extérieur adapté au diamètre intérieur du tube, comprenant :
un élément d'encliquetage (12) s'étendant en direction radiale (14) vers l'extérieur à partir du corps de base, qui est configuré pour s'encliqueter dans la percée du tube, de manière à empêcher un déplacement du manchon de raccordement (10) en direction axiale (16) par rapport au tube (22) à l'état encliqueté,
**caractérisé en ce que** l'élément d'encliquetage (12) comprend en outre un palier de butée (18) pour un élément de verrouillage (32), au moyen duquel d'autres éléments peuvent être fixés à l'intérieur du tube (22) équipé du manchon de raccordement (10).

2. Manchon de raccordement (10) selon la revendication 1, dans lequel le palier de butée (18) est formé par un évidement dans la surface orientée vers l'extérieur de l'élément d'encliquetage (12).

3. Manchon de raccordement (10) selon la revendication 2, dans lequel l'évidement a une forme sensiblement cylindrique.

4. Manchon de raccordement (10) selon l'une des revendications précédentes, dans lequel l'élément d'encliquetage (12) est mobile élastiquement en direction radiale (14) par rapport au corps de base.

5. Manchon de raccordement (10) selon la revendication 4, dans lequel l'élément d'encliquetage est relié au corps de base par le biais d'un affaiblissement de matière (24), pour obtenir la mobilité en direction radiale (14).

6. Manchon de raccordement (10) selon l'une des revendications précédentes, qui comprend en outre une lèvre d'étanchéité (38) périphérique à son extrémité opposée à la direction axiale (16).

7. Manchon de raccordement (10) selon l'une des revendications précédentes, qui comprend, à son extrémité dans la direction axiale (16), un bord (28) s'étendant en direction radiale (14) à partir de la surface du corps de base, pour limiter un déplacement du manchon de raccordement (10) par rapport au tube (22) dans le sens opposé à la direction axiale (16).

8. Manchon de raccordement (10) selon l'une des revendications précédentes, qui comprend en outre, à son extrémité dans la direction axiale (16), à au moins une position en périphérie du corps de base, un mentonnet (30) s'étendant vers l'extérieur en direction radiale (14) à partir de la surface du corps de base et s'étendant dans le sens opposé à la direction axiale (16), pour empêcher un mouvement de rotation du manchon de raccordement (10) par rapport au tube (22).

9. Manchon de raccordement (10) selon la revendication 8, dans lequel le mentonnet (30) se trouve le long de la périphérie à la même position que l'élément d'encliquetage (12).

10. Manchon de raccordement (10) selon l'une des revendications précédentes, dans lequel une surface orientée vers l'intérieur du corps de base est cylindrique et a un diamètre intérieur adapté à un objet à assembler au tube (22), dans lequel une surface orientée vers l'intérieur de l'élément d'encliquetage (12) comprend une surface suivant le contour de la surface cylindrique à l'état encliqueté.

11. Tube cylindrique (22), notamment tube d'aspirateur, doté du manchon de raccordement (10) selon l'une des revendications précédentes inséré à une extrémité du tube, comprenant en outre :
un élément de verrouillage (32) doté d'un ergot d'encliquetage (34) s'étendant dans l'intérieur du tube (22), qui peut être enlevé hors du volume intérieur du tube par actionnement d'un bras de levier supporté dans le palier de butée (18).
